Europäisches Patentamt

European Patent Office

Office européen des brevets

(11) Publication number: **0 171 403**

**B1**

(12)     EUROPEAN PATENT SPECIFICATION

(45) Date of publication of patent specification: **27.09.89**     (51) Int. Cl.⁴: **A 01 J 5/04,** A 01 J 7/00

(21) Application number: **85900674.4**

(22) Date of filing: **22.01.85**

(86) International application number:
**PCT/FI85/00008**

(87) International publication number:
**WO 85/03409 15.08.85 Gazette 85/18**

(54) **MEANS FOR MEASURING MILK OBTAINED BY MILKING.**

(30) Priority: **03.02.84 FI 840457**

(43) Date of publication of application:
**19.02.86 Bulletin 86/08**

(45) Publication of the grant of the patent:
**27.09.89 Bulletin 89/39**

(84) Designated Contracting States:
**AT BE CH DE FR GB LI LU NL SE**

(56) References cited:
**DK-C- 124 442**
**SE-B-81 021 875**
**SU-A- 858 680**

(73) Proprietor: **OJALA, Lauri**
**Verhiöpolku 5 as. 2**
**SF-70280 Kuopio 28 (FI)**

(72) Inventor: **OJALA, Lauri**
**Verhiöpolku 5 as. 2**
**SF-70280 Kuopio 28 (FI)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Winter-Roth**
**Bavariaring 4**
**D-8000 München 2 (DE)**

Courier Press, Leamington Spa, England.

## Description

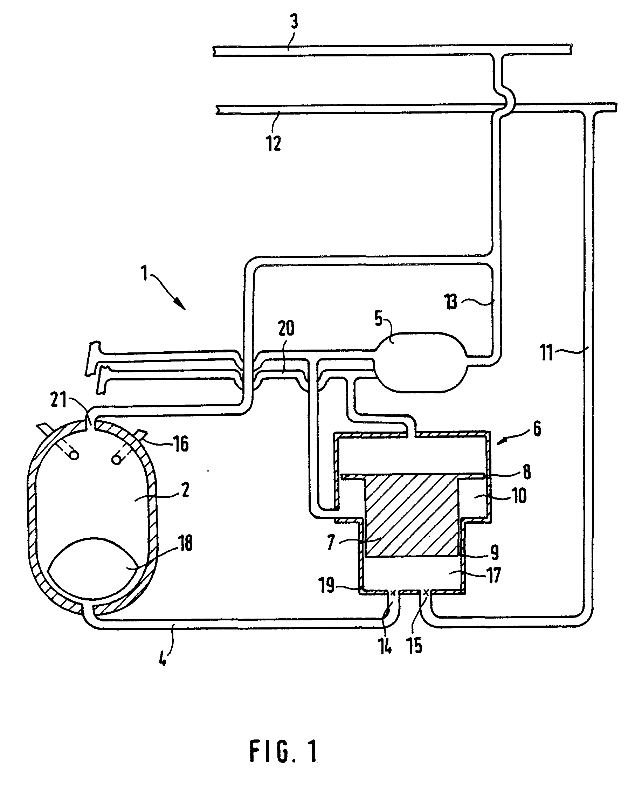

In the FI—A—65697 is described an auxiliary to a milking machine, able to pump the milk which is present under vacuum in the centrepiece of the milking machine into the milk pipe of a pipe milking machine, to be under normal pressure. The apparatus described in said application is designed to operate under control by the pulsator belonging to the milking machine. In the same patent application has also been observed the possibility, afforded by the apparatus, to measure the milk with the pump belonging thereto. This known apparatus is schematically shown in Figure 1 of the present application.

In the apparatus described in FI—A—65697, the milk pump executes one reciprocating movement during each double stroke of the pulsator. In order to achieve accurate milk measurement under these conditions, a measuring pick-up is required, and electronics of a given level, so that the combined volume of the piston strokes, which are different in length, might be accurately found. It has been found that this apparatus besides a complex concept of measuring signal evaluation consumes a relatively great air quantity.

A further means for measuring milk obtained by milking is described in SE—B—8 102 187. This means according to the preamble of claim 1, however, uses complex control and measuring means for deriving a correlation between the movement of a pulsator and the quantity measuring device.

It is therefore the object underlying the present invention to provide a means according to the preamble of claim 1 which is capable of measuring the quantity of milk by using a less complex measuring system.

This object is achieved by the features indicated in the characterizing part of claim 1. According to the new solution the movements of the piston can be made equal in length within the limits imposed by practical measuring accuracy. The quantity of milk which has passed through the pump is then found by the aid of a simple mechanical counter. It is of an additional advantage that the piston stroke length can be empirically adjusted so that the requisite measuring accuracy is easily attained.

The invention is explained in greater detail with respect to the attached figures.

Fig. 1 presents the apparatus disclosed in FI—A—65697;

Fig. 2 presents the pump 6 of the apparatus of the present invention, by which the milk is drawn from the centrepiece 2, to which the milk has been conducted from the teats, and is pumped into the milk pipe 12, by which the milk runs into the farm tank.

Fig. 3 presents the equivalent apparatus after improvement, with the means of the invention;

Fig. 4 presents one embodiment of the level controller belonging to the centrepiece, sectioned and schematically depicted;

Fig. 5 presents a part of the preceding, this part serving as vacuum return tube;

Figs. 6a and 6b present the positions of the level controller of the flexible vacuum tube, with the level controller at different heights;

Fig. 7 presents the section of another type of level controller;

Fig. 8a and 8b present different positions of the control valve when the vacuum is present over and under the piston.

In the following is described, with reference to Fig. 1 of the attached drawing, schematically a pipe milking machine with overhead milk pipe, this machine being provided with an auxiliary unit according to the Patent No. 65697.

In the pipe milking machine 1 of prior art, the vacuum fluctuations acting on the teat and have been substantially eliminated by directing the air and the milk by different routes from the centrepiece 2 which is provided with level controller 18; the air by the overhead route by the vacuum pipe 3, and the milk by the lower route along the suction pipe 4.

The level controller 18 is so constructed that it also closes the mouth 21 of the air pipe if the milk level in the centrepiece 2 rises to high for any reason. The weight of the level controller 18 causes the level controller to come off the aperture immediately after the milk level has gone down.

Removal of the milk, separately by the lower route, is rendered possible by the piston pump 6 controlled by the pulsator 5 belonging to the milking means 1 and utilizing the vacuum prevailing in the vacuum pipe 3. In the example, the pump 6 has been connected to the double suction tube 20 of the milker, in parallel with the pulsation chambers (not depicted) of the milker. The operation of the pump is rendered possible by the difference in surface area between the air and milk faces 8, 9 of the milk-drawing piston 7. The pushing force, again, which the pump 6 is required to produce results from the feature that the vacuum is conducted with the aid of the pulsator 5 to the "collar" 10 formed under the air face 8.

The vacuum pump generates a vacuum which can be used towards performing work. Correspondingly, the milk is under the same vacuum in the centrepiece 2. The pump 6 (a differential pump) renders possible the drawing of the milk into normal pressurized space, using for working force a vacuum of equal magnitude, and it is thus understood that the different-sized surface areas of the milk face 9 and air face 8 enable the piston 7 to work.

The pushing force of the pump 6 is needed to push the milk by the milk tube 11 into the milk pipe 12, where normal pressure may prevail—differing from conditions in conventional milking machines.

The milk that has been drawn using the apparatus on the invention is conducted in usual manner from the teats through teat rubbers 16, under vacuum, to the centrepiece 2. During the suction phase, the pump 6 draws during the initial part of the pulsator's 5 double stroke milk that is present in the centrepiece 2; in this situation the milk passes through the suction pipe 4 and through the valve 14 to the milk volume 17 of the pump 6. The pump continues to draw until the level controller 18 meets the bottom of the centrepiece 2, at which time the milk flow will stop.

During the ultimate part of the pulsator's 5 double stroke, that is the compression phase, the piston 7 pushes the milk through the valve 15 and through the milk tube 11 into the milk pipe 12, which slopes downward towards the farm tank (not depicted), and the milk enters the farm tank under its own weight.

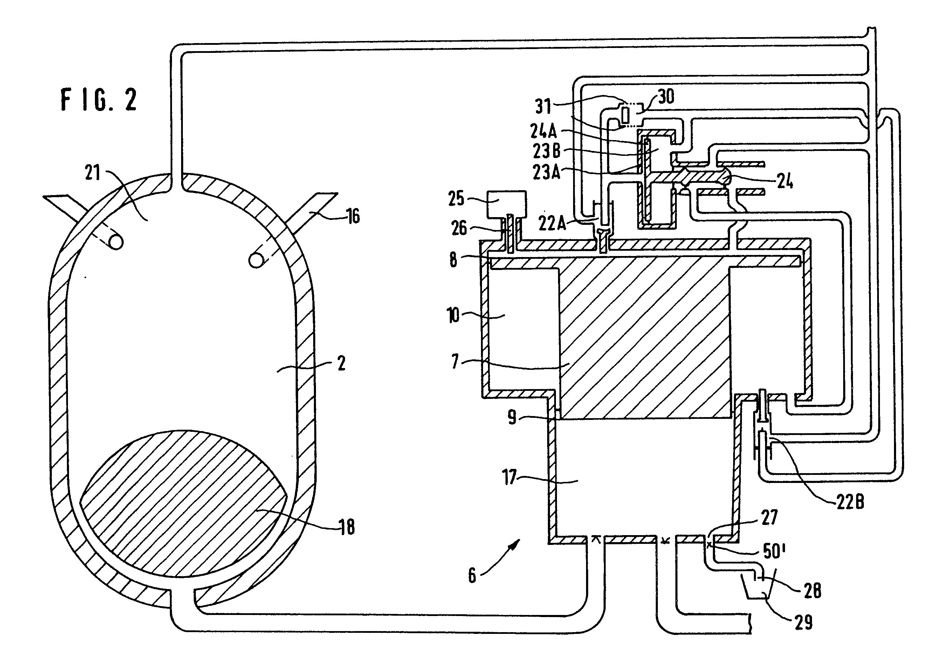

The operation of the milk pump in the means of the invention depicted in Fig. 2 has been made independent of the pulsator by the arrangement that with the aid of a particular value system the pump draws milk from the centrepiece 2 in accordance with the quantity drawn from the cow and admitted into the milk pipe by the level controller 18. When the piston has reached its extreme position, it opens the reversing valve 22a, through which the vacuum was admitted to the other side 23a of the piston moving the control valve 24, whence further follows that the control valve shifts into that position in which it controls the piston to commence its compression stroke. In contrast to the suction stroke, the compression stroke of the piston is continuous. When the milk chamber of the pump has been emptied, the reversing valve 22b on the underside operates as has been described above regarding the operation of the topside reversing valve, and it shifts the piston to do its suction stroke once more.

When the control valve 24 is in the position shown in the figure and in the subsequent step vacuum enters the volume 23b through the reversing valve 22b, the vacuum hereby created in the volume 23a may impede the movement of the piston. In order to eliminate this effect, the tubes leading to the volumes 23a and b have been connected by means of a connecting valve 30, which admits normal pressure through apertures 31, on that side where the vacuum is lowest.

The vacuum-operated piston 24a of the control valve 24 conducts during the compression phase the normal pressure over the pump piston 7 and the vacuum into the "collar volume" 10 of the pump and during the suction phase, similarly, the normal pressure into the pump's "collar volume" 10 and the vacuum over the pump piston 7.

The movements of the piston in the pump according to the invention can be made equal in length within the limits of practical measuring accuracy, as was already pointed out. With the aid of a rod or equivalent 26 extending through the pump cover, the push strokes of the piston can be transmitted to a mechanical counter 25 and the milk quantity that has been pumped can thus be measured. An influence is also exerted on the accuracy of measurement by the special design of the centrepiece 2, where the level controller 18 inhibits the entrainment of air with the milk as far as into the pump. When the milk is splashing inside the centrepiece, the risk is incurred that milk enters the air pipe. In the attempt to counteract this danger, the air is set in powerful rotary motion at the mouth of the pipe 21, whereby any milk droplets in the air are flung farther away from the mouth aperture. The above-mentioned features are helpful towards achieving a result of measurement that is accurate enough.

To the purpose of sampling the milk that has passed through the pump, in the present example a hole 27 has been drilled in the pump cover, the size of this hole being adjustable in connection with the milking of cows in different stages of lactation, so that the requisite sample quantity will accumulate. The hole can be covered when there is no need to draw a sample. During the pushing phase of the pump, overpressure prevails in the milk volume, whereby part of the milk will flow through the sampling hole into the tube 28 leading to a sample container, this tube incorporating a valve 50' preventing return flow of the milk.

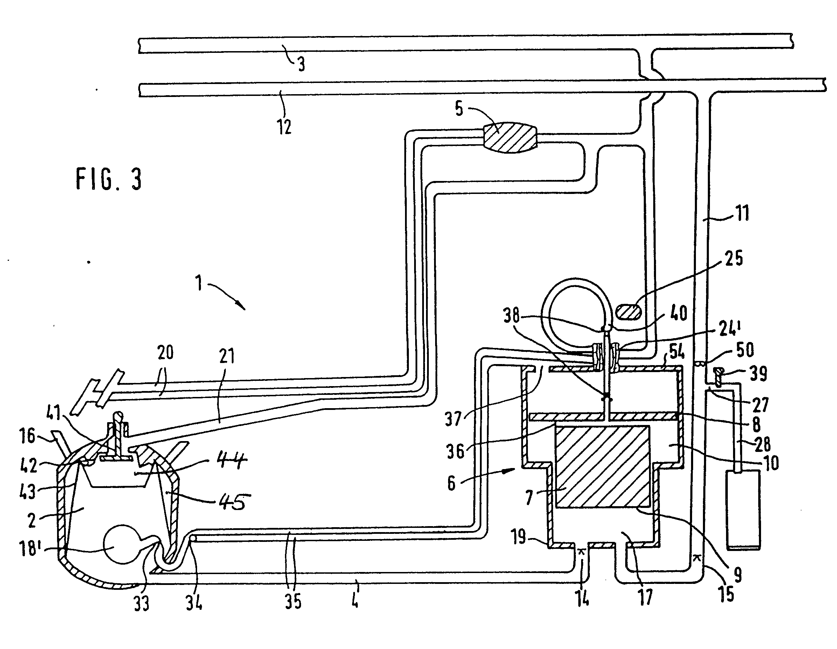

In the apparatus of Fig. 3, illustrating another embodiment, the operation of the milk pump has equally been made independent of the pulsator 5 by constructing on the cover of the pump 6, concentrically with the piston 7, a control valve 24' so that the pump 6 will draw milk from the centrepiece 2 accordingly as milk is drawn from the cow. Hereby the pulsator 5 is liberated to carry out its primary task, and the milking event itself is unchanged, compared with milking apparatus in present use. The valve 24' is actuated by a tubular stem 40 attached to the piston 40, with the aid of stop 38. It is possible by changing the position of these stops 38 on the tubular stem 40 to adjust the movement of the piston 7 to be such as is desired in view of emptying the pump and of milk measurement. The tubular stem 40 may also serve as air tube (as in Fig. 3), in which case the communication between the valve 24' and the collar volume 10 goes through the tubular stem and in the piston through holes 36. The stem may furthermore be used to transmit to the counter 25 information on the number of strokes performed by the piston 7, to the purpose of measuring the milk quantity.

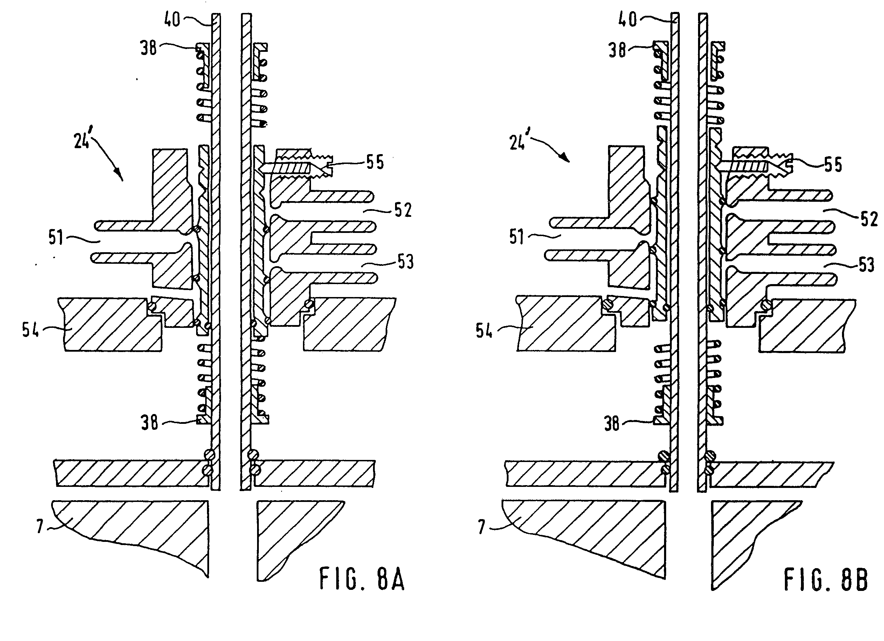

In Fig. 8A is shown the design and position of the valve 24' when the valve directs vacuum from the nipple 51 to the nipple 53, from which a connection exists through the pump cover 54 to the topside of the piston 7. In this instance, normal pressure has access to the collar volume 10 because the lower end of the stem leads through the passage 36 in the piston to the volume 10. The opposite case is depicted in Fig. 8B. In that case, the vacuum goes by the route 51, 52 to the collar volume 10 and the normal pressure goes above the top surface 8 of the piston 7.

The operation of the valve 24' is to admit vacuum alternatingly on both sides 8, 10 of the upper part of the piston 7. On the opposite side is admitted normal pressure. A locking selector 55 keeps the valve in that position into which it has been shifted, in each instance, by mediation of the tubular stem and of the springs belonging to the stops 38. As the piston is approaching its end position, the spring belonging to the stop 38 is put under tension. When the piston has progressed far enough in its motion, the spring force is high enough to release the locking selector 55, and the valve moves in continuous motion to the other extreme position, where it is again arrested by the locking selector. It is essential with a view to the pump's operation that the valve 24 does not stop in any intermediate position; it must remain arrested in one or the other end position at all times except when reversing. The sensitivity of the valve 24' in its operation can be adjusted, on one hand, by altering the locking force of the locking selector 55 and, on the other hand, by replacing the springs on the stops 38 with springs of different stiffness. It may turn out to be necessary, in order to improve the measuring accuracy of the pump, to construct the stops 38 so that after the spring has been loaded they trigger the locking selector 55 by direct contact, at an exactly defined position time after time.

The apparatus described here has in fact been developed in the direction that the level controller 18' will not obstruct the milk flow at any stage and that it instead regulates the strength either of the suction and pushing phases or merely of the pushing phase of the pump 6 in such manner that when the centrepiece 2 is emptied of milk the power supply to the pump through the double suction tube 35 ceases altogether. The pump will then wait for more milk to arrive, to raise the level controller and to admit additional power to the pump, in this manner steplessly regulating the pump power from zero to maximum power.

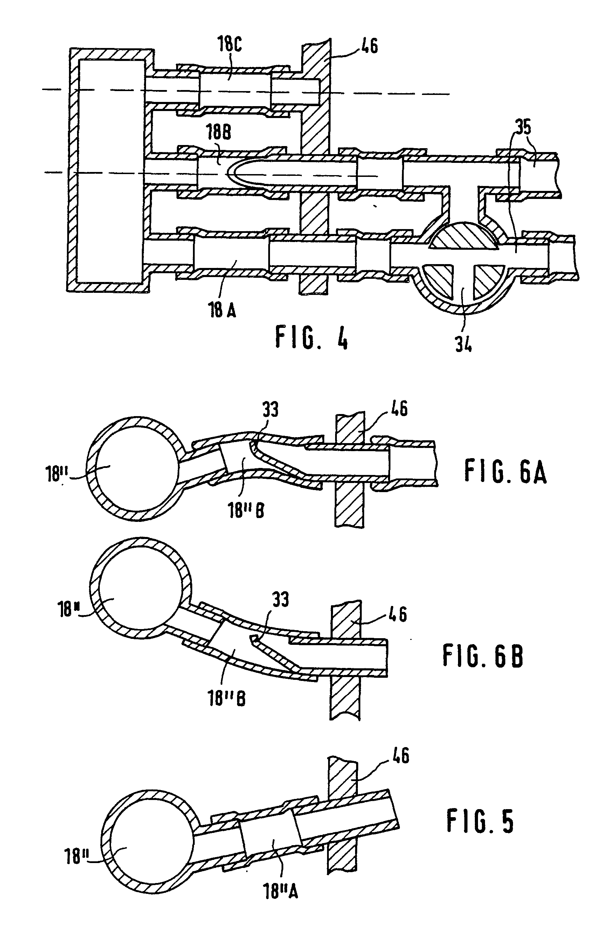

When the milk level is at minimum in the centrepiece 2, the level controller 18 descends to its lower position, whereby the throttling point 33 (Fig. 6b) is completely closed. When the milk level rises again, the throttling point 33 is opened and it admits vacuum to the pump 6, thus causing the pump's operation to start. In Fig. 4 is shown the design of one embodiment of the level controller 18' and of the control system. Fig. 5 shows the sidemost tubes 18''A, 18''C, of which has been shown only one (18''A), which also serves as vacuum return tube, and the other being needed to lend stability to the level controller 18''. The sidemost tubes 18''A, 18''C may be so placed that they press down on the level controller 18'' and thereby close the throttling point 33 when the centrepiece 2 is empty. The buoyancy of the level controller 18'' must be able to cancel the downward directed bending force from the sidemost tubes 18''a, 18''c when the milk level rises.

For managing the operation of the pump 6 is needed for instance a three-way valve 34, which in the position of Fig. 4 lets the vacuum pass through, through the level controller 18', 18'', 18'''. This position is the so-called working position. The valve 34 may also be turned so that it allows the passage of the vacuum past the throttling point 33. In that case the pump will run continuously, which is necessary, e.g., when emptying the apparatus of milk and when washing the apparatus. It is also possible with the aid of the valve 34 to inhibit altogether the passage of vacuum and thereby to stop the pump.

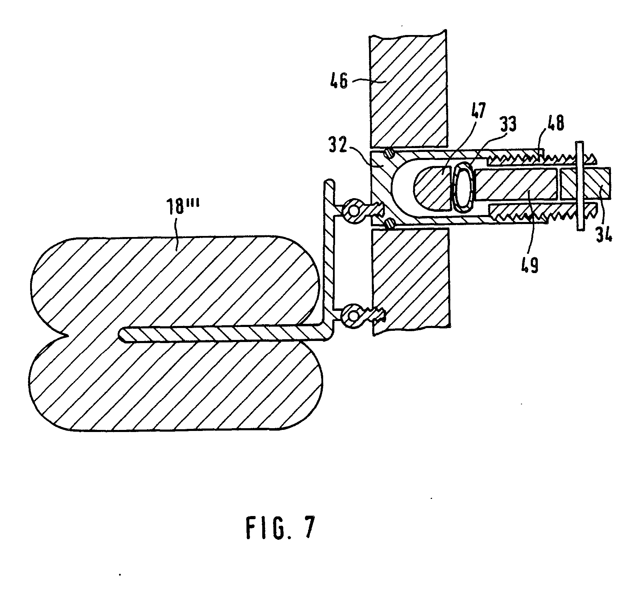

In Fig. 7 is presented a level controller design 18''' differing from that of Fig. 4. When in the centrepiece 2 the milk level is at its minimum, information regarding the position of the level controller 18''' is transmitted with the aid of a piston 32 (Figs. 3 and 7) or equivalent to the throttling valve 33. The valve 33 serves as air flow regulator in that the movements of the level controller 18''' cause the piston 32 to move longitudinally. When the level controller 18''' is in its lowest position, the throttling valve 33 can be adjusted to be completely closed, by turning the threaded sleeve 48. The throttling brace 47 is fixed with threads through the piston 32 to the cylinder walls and thereby acts as anvil against which the pin 49 moving along with the piston 32 may throttle the throttling valve 32 to be completely closed. Management of the pump operation is rendered possible by an accentric selection 34', which has three positions. In position 1 (in Fig. 7) the eccentric selector 34' is in a position in which it does not press enough against the pin 49 for this pin to reach to throttle the throttling valve 33 to be closed. Thus, in this position the pump runs incessantly, independent of the position of the level controller 18'''. This function is required, for instance, at the end of milking when the apparatus has to be emptied of milk, and in connection with washing. In position 2 (not in the figure) of the eccentric selector 34', the eccentric selector 34' is turned in parallel the piston 32. The throttling valve 33 is then closed when the level controller 18''' is in its bottom position and it opens accordingly as the level controller 18''' ascends. This position is the so-called working position. When the eccentric selector 34' is turned to its other extreme position, it presses the pin 49 against the anvil 47 to such extent that the level controller 18''' rises to its top position, pulled by the piston 33, and therefore the throttling valve 33 is also fully closed, independent of other factors. This position is needed when it is desired that the pump temporarily completely ceases to operate.

The double suction tube 35 may also be carried to the centrepiece 2 through the bottom (Fig. 3), and control of air flow at the throttling point 33 is effected by merely bending the flexible tube so that in one extreme position it is completely occluded and in the other extreme position (when it is straight), fully open. Hereby, enlargement or the filter area 43 is rendered possible when required. If electronics are introduced in the apparatus, leads may be substituted for the double tube 35. In that case a separate level detector will actuate a vacuum valve provided in conjunction with the pump, thus replacing the joint operation of the valves 33 and 24 in this apparatus.

The pump pulse counter 25 (Fig. 3) receives its driving force (a pulse) e.g. from the tubular stem 40. The measuring accuracy of the counter is restricted to whole "pumpfuls" (e.g. 2 dl). If even more accurate measuring data are desired, such data may be read e.g. from the position of a mark provided on the piston on a scale mounted somewhere on the cylinder. The counter 25 may also obtain its driving force e.g. with the aid of an air tube leading to the volume 10, in which case the counter senses the pressure fluctuations in said volume. If electronics are incorporated in the apparatus, the further use of such pulse data is quite easy and affords numerous possibilities. Furthermore, the measuring data may be applied to control for instance the operation of the teat cup detacher.

Forming of foam in the centrepiece is a problem during milking. Therefore, a filter supported by a separate frame has been added to the centrepiece, this filter naturally also having the task to filter out from the milk any foreign particles and to prevent their being carried e.g. into the valves of the pump 6. Filtering the milk at this stage is also sensible in view of direct observation of the milking process. It is understood that a foreign particle that has been caught in the filter is directly visible through the transparent cover of the centrepiece.

With the aid of the filter 43 it is however also possible to prevent milk foam from being carried from the foam space 45 of the centrepiece into the vacuum tube 21. The filter is urged on one hand against the cover of the centrepiece on top and on the other hand against the bottom of the centrepiece below, defining in the centrepiece a foam space 45. When differential pressures arise between the foam space 45 and the central part of the centrepiece and further the vacuum tube, the air in the foam space must pass twice through the filter to reach the vacuum tube 21, whereby the foam is killed. It is then possible that from the filter small milk droplets are detached and entrained with the milk flow, and for their elimination a vortex space 44 has been left in the cover of the centrepiece. This space is confined by an annular rampart 42 and the filter 43. In the rampart, grooves have been machined to direct the air flow entering the vortex space in the horizontal plane to produce a vortex, the strength of this vortex always increasing when the air flow increases in strength, and vice versa. To the same end may be employed a bulge installed in the vacuum tube 21, at which the air flow directed away from the centrepiece is directed into vortex motion.

With a view to obtaining a cow-specific milk sample, an intermediate piece may, when required, be installed in the milk tube 11, comprising a valve 50, a sampling nipple 27, a sample quantity regulating hole, or valve, 39 and a sample conductor. It is further possible to conjunction with the pump for this purpose to install a holder for the sample collecting vessel 29. The valve 50 may be replaced with a check valve (not depicted) inserted in the sample conductor 28. If it is desired to take for sample a given aliquot (e.g.

2%), a nozzle of suitable size is substituted for the valve 39. If, again, the aim is to get equal samples of each cow, independent of their milk yield, the sample quantity can be adjusted by the aid of the valve 39. The valve trottles, over a spring, the tube, and the quantity of the milk sample flowing through the throttling point during the pushing phase of the pump 6 will depend on the strength of this throttling.

The function of the level controller 18′, 18″, 18‴ as taught by the invention is important in order that the stroke length of the pump piston can be maintained at constant length with sufficient accuracy, the air quantity consumed by the pump can be restricted, and the milk can be handled as gently as possible to its sensitive coming phase. However, the result of measurement is also affected by the other circumstances presented here.

In the foregoing, the inventive idea has been set forth, in which the constructions may vary within the scope of the claims. The driving force for the pump may be electricity, or another power source, instead of vacuum.

## Claims

1. Means for measuring milk drawn with a milking machine in an apparatus where in a centrepiece (2) during milking a continuous vacuum is maintained by conducting the air from the upper part of the centrepiece into a vacuum pipe (3) and by conducting the milk with the aid of a pump (6) via a lower route along a suction pipe (4) into a milk pipe (12), wherein the pump (6) is provided with a piston (7), the movements of which are produced by utilizing vacuum or another force and the milk pumped by it from the suction pipe (4) contain virtually no air, and is provided with means which measure the milk quantity that has been pumped on the basis of the number of strokes of the pump piston (7), characterized in that the operation of the pump (6) is controlled by a control valve (24; 24′) whereby the pump piston (7) on arriving at the end of the suction stroke actuates a reversing member (22a) such that the control valve (24, 24′) shifts into a position in which it initiates the pumping stroke at the end of which the piston (7) actuates either the said or alternatively another reversing member (22b) thereby shifting the control valve (24, 24′) into a position initiating the suction stroke of the pump piston (7).

2. Means according to claim 1, characterized in that the reversing member is a suction-end reversing valve (22a) which upon opening admits vacuum on one side (23a) of a piston (24a) moving the control valve, and the other reversing member is a compression-end reversing valve (22b) which upon opening admits vacuum into another opposite volume (23b) of the piston (24a).

3. Means according to claims 1 or 2, characterized by means (28, 29, 50′; 27, 28, 39) for taking a sample quantity of desired magnitude.

4. Means according to one of the claims 1 to 3, characterized in that the control valve comprises a vacuum-actuated piston (24a) and a control valve (24) controlled by the movement of said piston and which during the compression phase of the pump piston (7) conducts the normal pressure on the top of the pump piston (7) and the vacuum into the "collar volume" (10) of the pump, and respectively, during the suction phase the control valve (24) conducts the normal pressure to the "collar volume" (10) of the pump and the vacuum on top of the pump piston (7).

5. Means according to one of the claims 2 to 4, characterized by flexible tubes leading to the volumes (23a and 23b) of the control valve, these tubes being connected with a connecting valve (30) to conduct the normal pressure through apertures (31) to that side where the vacuum is lowest.

6. Means according to one of the claims 1 to 5, characterized in that it comprises a rod (26) or equivalent extending through the cover of the pump, by the aid of which the piston's pushing movements are transmitted to a mechanical counter (25) for measuring the milk quantity that has been pumped.

7. Means according to one of the claims 3 to 6, characterized in that for taking a sample of the milk that has passed through the pump, a coverable hole (27), the size of which being changeable, has been drilled in the cover of the pump's milk side, so that the requisite sample quantity is caused to accumulate, which sample can be taken into a flexible tube (28) leading to a sample container, this tube containing a valve preventing back flow.

8. Means according to one of the claims 1 to 7, characterized in that the centrepiece contains a level controller (18) which controls the operation of the pump (6) in accordance with the milk quantity present in the centrepiece (2).

9. Means according to claim 8, characterized in that the level controller (18', 18'', 18''') in the centrepiece controls the vacuum conducted to the control valve (24') in such a way that if there is no milk in the centrepiece (2) the level controller (18', 18'', 18''') with the aid of a throttle (33) closes the vacuum line leading to the pump (6) and admits the vacuum to the pump (6) when milk arrives in the centrepiece (2), whereby the operation of the pump starts, the level controller (18', 18'', 18''') steplesely controlling the power of the pump (6) from zero to maximum power.

10. Means according to claim 8 or 9, characterized in that a vacuum return tube (18a) coming from the pump (6) and containing a three-way valve or equivalent (34, 34') is lead to the level controller (18', 18'', 18''') which three-way valve in its working position admits the vacuum through, through the level controller (18', 18'', 18'''), in its further position admits the vacuum past a throttling point (33) so that the pump runs continuously, and in its third position inhibits the power supply totally so that the pump (6) is stopped.

11. Means according to one of the claims 8 to 10, characterized in that the level controller (18', 18'', 18''') controls electrically the control valve (24') running the pump (6).

12. Means according to any one of the preceding claims, characterized in that in the upper part of the centrepiece (2) is provided a filter (43) abutting on the walls and cover of the centrepiece and defining a foam space (45), thereby preventing the access of milk foam form entering the vacuum tube (21).

13. Means according to claim 13, characterized in that in the cover of the centrepiece (2) there is left a vortex space (44) defined by an annular rampart (42) and the filter (43), wherein in the rampart (42) grooves have been machined so that they direct the air flow entering in the horizontal plane the vortex space to become a vortex, thereby eliminating the entrainment of droplets in the vacuum air.

14. Means according to any one of the preceding claims 8 to 15, characterized in that to the piston (7) there is attached a tubular stem (40), provided with stops actuating the control valve (24), with the aid thereof the movement of the piston (7) being controlled to be as desired by controlling the control valve (24') to admit the vacuum alternatingly on either side (8, 10) of the upper part of the piston (7).

15. Means according to claim 15, characterized in that the tubular stem (40) additionally serves as air tube between the control valve (24') and the collar volume (10) of the piston (7).

16. Means according to one of the claims 8 to 15, characterized in that the control valve (24') comprises a locking selector (55) which maintains the valve up to the next shifting in that position into which it has been shifted in each instance by mediation of the tubular stem (40).

17. Means according to claim 16, characterized in that the stops (38) are provided with a spring which comes under tension when the piston (7) approaches its extreme position and which when it has reached during progress of the piston sufficient tension triggers the locking selector (55), whereby the control valve (24') goes in continuous motion into the other extreme position.

18. Means according to claim 17, characterized in that the stops (38) after tensioning the spring trigger the locking selector (55) with direct contact at an exactly defined position, time after time.

19. Means according to one of the claims 14 to 18, characterized in that the pumping pulse counter (25) receives its driving force from the tubular stem (40).

20. Means according to one of the claims 14 to 18, characterized in that the counter (25) receives its driving force from the pressure fluctuations in the lower volume (10) of the upper part of the piston (7) through an air tube.

21. Means according to any one of the preceding claims, characterized in that for obtaining a cow-specific proportional sample in the milk tube (11) there is provided an intermediate piece comprising a valve (50), a sampling nipple (27), a regulating hole or valve (39), and a sample conductor.

**Patentansprüche**

1. Vorrichtung zum Messen von mit einer Melkmaschine gemolkener Milch, wobei in einem Zentralteil (2) während des Melkens ein kontinuierlicher Unterdruck aufrechterhalten wird, indem Luft von dem oberen Teil des Zentralteils in eine Unterdruckleitung (3) geleitet wird und indem die Milch mit Hilfe einer Pumpe (6) über eine untere Bahn entlang einer Saugleitung (4) in eine Milchleitung (12) geleitet wird, wobei die Pumpe (6) mit einem Kolben (7), dessen Bewegungen unter Verwendung eines Unterdrucks oder einer anderen Kraft erzeugt werden und der Milch aus der Saugleitung (4) pumpt, die im wesentlichen keine Luft enthält, und mit einer Vorrichtung versehen ist, die die gepumpte Milchmenge auf der Basis der Anzahl der Hübe des Pumpenkolbens (7) mißt, dadurch gekennzeichnet, daß der Betrieb der Pumpe (6) mittels eines Steuerventils (24; 24') gesteuert wird, wobei der Pumpenkolben (7) bei Erreichen des Endes des Saughubes ein Umkehrelement (22a) derart betätigt, daß das Steuerventil (24; 24') in eine Position verschuben wird, in der es den Pumphub auslöst, an dessen Ende der Kolben (7) entweder das genannte oder alternativ ein anderes Umkehrelement (22b) betätigt, wodurch das Steuerventil (24; 24') in eine Position verschoben wird, in der es den Saughub des Pumpenkolbens (7) auslöst.

2. Vorrichtung nach Anspruch 1, dadurch gekennzeichnet, daß das Umkehrelement ein saugendiges Umkehrventil (22a) ist, das bei Öffnung dem Unterdruck auf einer Seite (23a) eines Kolbens (24a) eine Bewegung des Steuerventils gestattet, und daß das andere Umkehrelement ein kompressionsseitiges Umkehrventil (22b) ist, das bei Öffnung den Unterdruck in einem engegengesetzten Raum (23b) des Kolbens (24a) zuläßt.

3. Vorrichtung nach Anspruch 1 oder 2, gekennzeichnet durch eine Vorrichtung (28, 29, 50'; 27, 28, 39) zur Entnahme einer Probenmenge gewünschter Größe.

4. Vorrichtung nach einem der Ansprüche 1 bis 3, dadurch gekennzeichnet, daß das Steuerventil einen unterdruck-betätigten Kolben (24a) und ein Steuerventil (24) aufweist, das mittels der Bewegung des Kolbens gesteuert ist und das während der Kompressionsphase des Pumpenkolbens (7) den normalen Druck zur Oberseite des Pumpenkolbens (7) und den Unterdruck in den "Kragenraum" (10) der Pumpe und während der Saugphase den normalen Druck zum "Kragenraum" (10) der Pumpe und den Unterdruck zur Oberseite des Pumpenkolbens (7) leitet.

5. Vorrichtung nach einem der Ansprüche 2 bis 4, gekennzeichnet durch flexible Röhren, die zu den Räumen (23a und 23b) des Steuerventils führen, wobei die Röhren mit einem Verbindungsventil (30) verbunden sind, um den normalen Druck über Öffnungen (31) zu derjenigen Seite zu leiten, auf der der Unterdruck am geringsten ist.

6. Vorrichtung nach einem der Ansprüche 1 bis 5, gekennzeichnet durch einen Stab (26) oder ähnliches, der sich durch das Gehäuse der Pumpe erstreckt und mit dessen Hilfe die Schiebebewegungen des Kolbens zu einem mechanischen Zähler (25) übertragen werden, um die gepumpte Milchmenge zu messen.

7. Vorrichtung nach einem der Ansprüche 3 bis 6, dadurch gekennzeichnet, daß zur Entnahme einer Probe der Milch, die die Pumpe passiert hat, ein abdeckbares Loch (27) veränderbarer Größe in das Gehäuse auf der Milchseite der Pumpe gebohrt ist, so daß sich die notwendige Probenmenge ansammelt, wobei die Probe in einer flexiblen Röhre (28), die zu einem Probenbehälter führt, entnommen werden kann, wobei die Röhre ein Ventil enthält, das einen Rückfluß verhindert.

8. Vorrichtung nach einem der Ansprüche 1 bis 7, dadurch gekennzeichnet, daß das Zentralteil eine Niveausteuerung (18) enthält, die den Betrieb der Pumpe (6) gemäß der in dem Zentralteil (2) vorhandenen Milchmenge steuert.

9. Vorrichtung nach Anspruch 8, dadurch gekennzeichnet, daß die Niveausteuerung (18', 18'', 18''') in dem Zentralteil den dem Steuerventil (24') zugeführten Unterdruck in der Weise steuert, daß die Niveausteuerung (18', 18'', 18''') mit Hilfe einer Drossel (33) die Unterdruckleitung, die zu der Pumpe (6) führt, schließt, wenn sich keine Milche in dem Zentralteil (2) befindet, und den Unterdruck zu der Pumpe (6) läßt, wenn Milch zu dem Zentralteil (2) gelangt, wodurch der Betrieb der Pumpe beginnt, wobei die Niveausteuerung (18', 18'', 18''') die Leistung der Pumpe (6) stufenlos von Null auf die maximale Leistung steuert.

10. Vorrichtung nach Anspruch 8 oder 9, dadurch gekennzeichnet, daß eine Unterdruck-Rückführungsröhre (18a), die von der Pumpe (6) ausgeht und ein Drei-Wege-Ventil oder ähnliches (34, 34') enthält, zu der Niveausteuerung (18', 18'', 18''') führt, wobei das Drei-Wege-Ventil in seiner Arbeitsstellung den Unterdruck zu der Niveausteuerung (18', 18'', 18''') hindurchläßt, in seiner weiteren Stellung den Unterdruck an einer Drosselstelle (33) vorbei zuläßt, so daß die Pumpe kontinuierlich arbeitet, und in seiner dritten Stellung die Leistungsversorgung vollständig verhindert, so daß die Pumpe (6) gestoppt ist.

11. Vorrichtung nach einem der Ansprüche 8 bis 10, dadurch gekennzeichnet, daß die Niveausteuerung (18', 18'', 18''') das Steuerventil (24'), das die Pumpe (6) betreibt, elektrisch steuert.

12. Vorrichtung nach einem der vorhergehenden Ansprüche, dadurch gekennzeichnet, daß im oberen Abschnitt des Zentralteils (2) ein Filter (43) angeordnet ist, das an den Wänden und dem Gehäuse des Zentralteils anliegt und einen Schaumraum (45) bildet, wodurch das Eintreten von Milchschaum in die Unterdruckleitung (21) verhindert ist.

13. Vorrichtung nach Anspruch 12, dadurch gekennzeichnet, daß in dem Gehäuse des Zentralteils (2) ein Wirbelraum (44) gebildet ist, der von einem ringförmigen Wall (42) und dem Filter (43) definiert wird, wobei in dem Wall (42) Nuten so ausgebildet sind, daß diese den Luftstrom, der in einer horizontalen Ebene in den Wirbelraum eintritt, verwirbeln, wodurch das Eintreten von Tropfen in die Unterdruck-Luft verhindert ist.

14. Vorrichtung nach einem der Ansprüche 8 bis 13, dadurch gekennzeichnet, daß an dem Kolben (7) ein röhrenförmiger Stab (40) angebracht ist, der mit Auschlägen für die Betätigung des Steuerventils (24) versehen ist, mit deren Hilfe die Bewegung des Kolbens (7) in gewünschter Weise steuerbar ist, indem das Steuerventil (24') so gesteuert wird, daß es den Unterdruck abwechselnd auf jeder Seite (8, 10) des oberen Abschnitte des Kolbens (7) zuläßt.

15. Vorrichtung nach Anspruch 14, dadurch gekennzeichnet, daß der röhrenförmige Stab (40) zusätzlich als Luftleitung zwischen dem Steuerventil (24') und dem Kragenraum (10) des Kolbens (7) dient.

16. Vorrichtung nach einem der Ansprüche 8 bis 15, dadurch gekennzeichnet, daß das Steuerventil (24') ein Verriegelungswahlelement (55) aufweist, das das Ventil bis zur nächsten Verschiebung in derjenigen Position hält, in die es mittels des rohrförmigen Stabes (40) verschoben wurde.

17. Vorrichtung nach Anspruch 16, dadurch gekennzeichnet, daß die Anschläge (38) mit einer Feder versehen sind, die unter Spannung gerät, wenn der Kolben (7) sich seiner extremen Position nähert, und die das Verriegelungswahlelement (55) auslöst, wenn sie während der Bewegung des Kolbens unter ausreichend großer Spannung steht, wodurch das Steuerventil (24') sich in kontinuierlicher Bewegung in die andere extreme Position bewegt.

18. Vorrichtung nach Anspruch 17, dadurch gekennzeichnet, daß die Anschläge (38) nach Spannen der Feder das Verriegelungswahlelement (55) immer wieder durch direkten Kontakt in exakt definierten Stellungen auslösen.

19. Vorrichtung nach einem der Ansprüche 14 bis 18, dadurch gekennzeichnet, daß der Pumpenimpuls-Zähler (25) seine Antriebskraft von dem röhrenförmigen Stab (40) erhält.

20. Vorrichtung nach einem der Ansprüche 14 bis 18, dadurch gekennzeichnet, daß der Zähler (25) seine Antriebskraft durch die Druckschwankungen in die unteren Raum (10) des oberen Abschnitte des Kolbens (7) über eine Luftleitung erhält.

21. Vorrichtung nach einem der vorhergehenden Ansprüche, dadurch gekennzeichnet, daß zur Erzielung einer kuh-spezifischen proportionalen Probe in der Milchleitung (11) ein Zwischenstück vorgesehen ist, das ein Ventil (50), einen Probennippel (27), ein Regulierungsloch oder -ventil (39) und einen Probenleiter aufweist.

**Revendications**

1. Moyens pour mesurer le lait tité par une machine de traite dans un appareil dans lequel une dépression continue est maintenue dans l'organe central (2) pendant la traite en envoyant de l'air depuis la partie supérieure de l'organe central dans le tube à vide (3) et en envoyant le lait à l'aide d'une pompe (6) par une voie inférieure le long d'un tube d'aspiration (4) dans un tube à lait (12), la pompe (6) étant munie d'un piston (7) dont les mouvements sont produits en utilisant la dépression ou une autre force et le lait est pompé par elle depuis le tube d'aspiration (4) qui ne contient virtuellement pas d'air, et étant munie de moyens qui mesurent la quantité de lait qui est pompée sur la base du nombre de courses du piston (7) de la pompe, caractérisés en ce que le fonctionnement de la pompe (6) est commandé par une soupape de commande (24; 24'), le piston (7) de la pompe, lorsqu'il parvient à l'extrémité de la course d'aspiration, actionnant un organe inverseur (22a) tel que la soupape de commande (24; 24') se déplace vers une position dans laquelle elle initie la course de pompage à la fin de laquelle le piston (7) actionne soit ledit organe inverseur soit alternativement un autre organe inverseur (22b), amenant ainsi la soupape de commande (24; 24') à une position initiant la course d'aspiration du piston (7) de la pompe.

2. Moyens selon la revendication 1, caractérisés en ce que l'organe inverseur est une soupape inverseuse (22a) à extrémité d'aspiration qui, quand elle s'ouvre, admet la dépression sur un côté (23a) d'un piston (24a) déplaçant la soupape de commande, et l'autre organe inverseur est une soupape inverseuse (22b) à extrémité de compression qui, lorsqu'elle s'ouvre, admet la dépression dans un autre volume opposé (23b) du piston (24a).

3. Moyens selon la revendication 1 ou 2, caractérisés par des moyens (28, 29, 50'; 27, 28, 39) pour prélever une quantité désirée d'échantillon.

4. Moyens selon l'une quelconque des revendications 1 à 3, caractérisés en ce que la soupape de commande comprend un piston (24a) actionné par la dépression et une soupape de commande (24) commandée par le mouvement dudit piston et qui, pendant la phase de compression du piston (7) de la pompe, dirige la pression normale sur la partie supérieure du piston (7) de la pompe et la dépression dans le "volume de collier" (10) de la pompe, et respectivement pendant la phase d'aspiration la soupape de commande (24) dirige la pression normale vers le "volume de collier" (10) de la pompe et la dépression sur la partie supérieure du piston (7) de la pompe.

5. Moyens selon l'une quelconque des revendications 2 à 4, caractérisés par des tubes flexibles allant aux volumes (23a et 23b) de la soupape de commande, ces tubes étant reliés à une soupape de liaison (30) pour diriger la pression normale par des ouvertures (31) vers le côté où la dépression est la plus basse.

6. Moyens selon l'une quelconque des revendications 1 à 5, caractérisés en ce qu'ils comprennent une tige (26) ou équivalente, s'étendant à travers le couvercle de la pompe, à l'aide de laquelle les mouvements de poussée du piston sont transmis à un compteur mécanique (25) pour mesurer la quantité de lait qui a été pompée.

7. Moyens selon l'une quelconque des revendications 3 à 6, caractérisés en ce que, pour prélever un échantillon de lait qui a passé par la pompe, on a percé dans le couvercle sur le côté à lait de la pompe un trou (27) pouvant être recouvert et dont la dimension peut être modifiée, de manière que la quantité d'échantillon désirée soit amenée à s'accumuler, lequel échantillon peut être envoyé dans un tube flexible (28) allant à un réceptacle à échantillons, ce tube contenant une soupape empêchant un écoulement en sens contraire.

8. Moyens selon l'une quelconque des revendications 1 à 7, caractérisés en ce que l'organe central contient un contrôleur de niveau (18) qui commande le fonctionnement de la pompe (6) en fonction de la quantité de lait présent dans l'organe central (2).

9. Moyens selon la revendication 8, caractérisés en ce que le contrôleur de niveau (18', 18'', 18''') de l'organe central commande la dépression envoyée à la soupape de commande (24') d'une manière telle que s'il n'y a pas de lait dans l'organe central (2), le contrôleur de niveau (18', 18'', 18''') ferme à l'aide d'un étranglement (33) la conduite à vide conduisant à la pompe (6) et admet la dépression vers la pompe (6) quand le lait parvient dans l'organe central (2), le fonctionnement de la pompe étant ainsi démarré, la contrôleur de niveau (18', 18'', 18''') commandant de façon continue la puissance de la pompe (6) entre la puissance nulle et la puissance maximale.

10. Moyens selon la revendication 8 ou 9, caractérisés en ce qu'un tube de retour de vide (18a) provenant de la pompe (6) et contenant un distributeur à trois voies ou équivalent (34, 34') est relié au contrôleur de niveau (18', 18'', 18'''), lequel distributeur à trois voies, dans sa position de travail, admet le passage de la dépression par l'intermédiaire du contrôleur de niveau (18', 18'', 18'''), et dans son autre position admet la dépression au-delà d'un point d'étranglement (33) de manière que la pompe fonctionne de façon continue, et dans sa troisième position inhibe l'alimentation en puissance de façon totale du manière que la pompe (6) soit arrêtée.

11. Moyens selon l'une quelconque des revendications 8 à 10, caractérisés en ce que le contrôleur de niveau (18', 18'', 18''') commande électriquement la soupape de commande (24') qui fait tourner la pompe (6).

12. Moyens selon l'une quelconque des revendications précédentes, caractérisés en ce que dans la partie supérieure de l'organe central (2) est prévu un filtre (43) venant buter contre les parois et recouvrant l'organe central et définissant l'espace à mousse (45), évitant ainsi l'accès de la mousse du lait dans le tube à vide (21).

13. Moyens selon la revendication 12, caractérisés en ce qu'il est ménagé dans le couvercle de l'organe central (2) un espace à tourbillon (44) défini par un rempart annulaire (42) et par le filtre (43), des gorges ayant été usinées dans le rempart (42) de manière à diriger l'écoulement de l'air pénétrant dans le plan horizontal dans l'espace à tourbillon de manière à devenir un tourbillon, éliminant ainsi l'entraînement de gouttelettes dans l'air sous dépression.

14. Moyens selon l'une quelconque des revendications 8 à 13, caractérisés en ce qu'une tige tubulaire (42) est fixée au piston (7), cette tige étant munie de butées actionnant la soupape de commande (24) à l'aide de laquelle le mouvement du piston (7) est commandé selon les besoins par la commande de la soupape de commande (24') de façon à admettre la dépression alternativement sur chaque côté (8, 10) de la partie supérieure du piston (7).

15. Moyens selon la revendication 14, caractérisés en ce que la tige tubulaire (40) sert en plus de tube à air entre la soupape de commande (24') et le volume en collier (10) du piston (7).

16. Moyens selon l'une quelconque des revendications 8 à 15, caractérisés en ce que la soupape de commande (24') comprend un sélecteur de blocage (50) qui maintient la soupape jusqu'au déplacement suivant dans la position dans laquelle elle a été déplacée dans chaque cas au moyen de la tige tubulaire (40).

17. Moyens selon la revendication 16, caractérisés en ce que les butées (38) sont munies d'un ressort qui est mis sous tension quand le piston (7) s'approche de sa position extrême et qui, lorsqu'il a atteint une tension suffisante pendant la progression du piston, déclenche le sélecteur de blocage (55), la soupape de commande (24') se déplaçant alors selon un mouvement continu vers l'autre position extrême.

18. Moyens selon la revendication 17, caractérisés en ce que les butées (38), après mise sous tension du ressort, déclenchent le séleceteur de blocage (45) par un contact direct dans une position définie avec précision, fois après fois.

19. Moyens selon l'une quelconque des revendications 14 à 18, caractérisés en ce que le compteur d'impulsions de pompage (25) reçoit sa force d'entraînement de la tige tubulaire (40).

20. Moyens selon l'une quelconque des revendications 14 à 18, caractérisés en ce que le compteur (25) reçoit sa force d'entraînement des fluctuations de la pression dans le volume inférieur (10) de la partie supérieure du piston (7) par l'intermédiaire d'un tube à air.

21. Moyens selon l'une quelconque des revendications précédentes, caractérisés en ce que pour obtenir un échantillon proportionnel et spécifique à une vache dans le tube à lait (11), ou prévoit un pièce intermédiaire comprenant une soupape (50), un ajutage d'échantillonnage (27), ou trou ou une soupape de régulation (49) et un conducteur à échantillons.

FIG. 1

1

FIG. 2

FIG. 3

EP 0 171 403 B1

FIG. 4

FIG. 6A

FIG. 6B

FIG. 5

4

FIG. 7

FIG. 8A

FIG. 8B

EP 0 171 403 B1